# EUROPEAN PATENT APPLICATION

(11) **EP 4 683 271 A1**
(43) Date of publication of application: **21.01.2026**
(21) Application number: 24189793.3
(22) Date of filing: 19.07.2024
(51) Int. Cl.: H04L 9/32

(54) **CERTIFICATION AUTHORITY DEVICE, A SUBJECT DEVICE AND A METHOD FOR OPERATING A CERTIFICATION AUTHORITY DEVICE**

(71) Applicant: Siemens Aktiengesellschaft, 80333 München (DE)
(72) Inventor: De Santis, Fabrizio, 80634 München (DE); Vaira, Antonio, 81379 München (DE)
(74) Representative: Siemens Patent Attorneys

(57) **Abstract**

The invention relates to a certification authority device (22) configured to: receive a public key message from an subject device, the public key message comprising a public key set, comprising a post-quantum public key related to a respective post-quantum cryptographic algorithm, a pre-quantum public key (18) related to a respective pre-quantum cryptographic algorithm, generate a certificate set according to a selected certificate set type of a group of supported certificate set types, the certificate set comprising at least one certificate, wherein the at least one certificate comprises the post-quantum public key and a post-quantum signature and/or the pre-quantum public key (18) and a pre-quantum signature; receive a first certificate request message (24) comprising a first request to provide a first certificate set (26) according to a first certificate set type; send a first certificate response message (34) comprising the first certificate set (26); receive a second certificate request message (36) comprising a second request to provide a second certificate set (30) according to a second certificate set type different from the first certificate set type; and send a second certificate response message comprising the second certificate set (30) according to the second certificate set type.

## Description

The present invention relates to a certification authority device, a subject device and a method for operating a certification authority device.

The present invention relates to the field of post-quantum cryptography (PQC). The term post-quantum cryptography (PQC) refers to the use of specific algorithms resisting quantum computing. In particular, the present invention relates to the field of hybrid cryptography comprising post-quantum cryptography (PQC). The term hybrid cryptography refers to cryptographic systems using both post-quantum algorithms, also called quantum secure algorithms, and pre-quantum algorithms, also called non-quantum secure algorithms or traditional algorithms.

Pre-quantum algorithms are mainly based on integer factorization problems, discrete logarithm problem or elliptic-curve discrete logarithm problem. Post-quantum algorithms are mainly based on Code-based cryptography, Lattice-based cryptography, Multivariate cryptography, Hash-based cryptography and Isogeny-based cryptography.

The emergence of post-quantum cryptography (PQC) brings promising advancements in information security, offering resistance against quantum computing threats. However, due to its novelty, building trust in PQC algorithms is an ongoing process that requires time and extensive testing to gain widespread adoption.

Certain government agencies (e.g., BSI, ANSSI) recommend the usage of hybrid cryptography in various contexts to ensure robustness during the transition period. X.509 certificates, commonly used for authentication, serve as a critical component in securing digital communications.

Numerous strategies have been proposed to support hybrid cryptography in X.509 certificates, seeking to combine pre-quantum cryptographic algorithms with post-quantum alternatives. Currently, the most prominent approaches are:
Hybrid composite: PQC algorithms, key pairs and signatures and appended to the pre-quantum counterparts and handled as one set of cryptographic primitives, i.e., hiding the hybrid nature to X.509 certificates and relying devices (e.g., applications and protocols) which, in turn, will manage the hybrid mechanism using the appropriate cryptographic libraries.

Hybrid non-composite: PQC algorithms, key pairs and signatures are included in dedicated extensions of the X.509 certificates. In this case relying devices will have to be upgraded to be able to handle the PQC hybrid cryptography.

As the field of post-quantum cryptography advances rapidly, it is anticipated that more hybrid cryptography strategies for X.509 certificates will be developed in the future, leading to different security requirements and algorithms. Consequently, manufacturers and service providers will need to adapt their products and services to support these new approaches.

It worth noting that also interoperability will be a major factor to consider during the migration to post-quantum cryptography, as there will be different generation of products in the field, with different capabilities in terms of X.509 certificates, hence, it is crucial to have mechanisms to guarantee interoperability.

In this landscape it must be considered that one of the major challenges arises from the constraints of resource-limited devices prevalent on Internet of Things (IoT) and embedded systems ecosystem. Additionally, devices provisioned today with specific types of X.509 certificates might have to make use of other type of X.509 certificates, which may pose additional challenges. These challenges include inadequate storage capacity and computational resources to accommodate the growing demands of hybrid certificates and their associated algorithms. This must be coupled with the fact that as of today, it is not clear which type of certificate format will be predominantly used in the future.

Internet-Draft "Composite ML-DSA for use in Internet PKI" defines Post-Quantum / Pre-quantum composite Key Signaturem algorithms suitable for use within X.509, PKIX and CMS protocols. Composite algorithms are provided which combine ML-DSA with RSA, ECDSA, Ed25519, and Ed448. The provided set of composite algorithms should meet most X.509, PKIX, and CMS needs.

Internet-Draft "Composite Public and Private Keys For Use In Internet PKI" defines a specific instantiation of hybrid paradigm called "composite" where multiple cryptographic algorithms are combined to form a single key, signature, or key encapsulation mechanism (KEM) such that they can be treated as a single atomic object at the protocol level.

Internet-Draft "Multiple Public-Key Algorithm X.509 Certificates" describes a method of embedding alternative sets of cryptographic materials into X.509v3 digital certificates, X.509v2 Certificate Revocation Lists (CRLs), and PKCS #10 Certificate Signing Requests (CSRs). The embedded alternative cryptographic materials allow a Public Key Infrastructure (PKI) to use multiple cryptographic algorithms in a single object, and allow it to transition to the new cryptographic algorithms while maintaining backwards compatibility with systems using the existing algorithms.

US 9 660 978 B1 describes a method of issuing a digital certificate.

US 9 794 249 B1 describes a method of issuing a digital certificate.

WO 2018 027 300 A1 describes a method of issuing a digital certificate.

JP 6 644 894 B2 describes a method of issuing a digital certificate.

X.510 specifies a wrapper protocol to ease application of alternative cryptographic algorithms.

The current practice among Certification Authorities (CAs) involves issuing only the necessary certificate requested by the subject device. Once issued, the CA delivers the certificate to the subject device and, in some cases, may also publish it in a certificate repository for wider accessibility. No additional X.509 certificate types are issued at the same time nor at a later time or on demand by the relying device.

It is therefore an objective of the present invention to provide a solution to provide certificates according to different standards.

This objective is achieved by the respective subject matter of the independent claims. Further implementations and preferred embodiments are subject matter of the dependent claims.

A first aspect of the present invention is related to a certificate authority. The certification authority device is configured to receive a public key message from a subject device. The public key message comprises a public key set. The public key set comprises a post-quantum public key related to a respective post-quantum cryptographic algorithm. The public key set further comprises a pre-quantum public key related to a respective pre-quantum cryptographic algorithm. In other words, the public key set provided by the public key message comprises the post-quantum public key that is configured according to a quantum secure cryptographic algorithm. In other words, the post-quantum cryptographic algorithm is an algorithm that is quantum secure. The pre-quantum public key is configured according to a pre-quantum cryptographic algorithm. In other words, the pre-quantum public key is configured for a pre-quantum cryptographic algorithm and may for example be RSA and ECDSA or another not quantum secure cryptographic algorithm. However, these pre-quantum cryptographic algorithms are common.

The certification authority device is configured to generate a certificate set according to a selected certificated set type of a group of supported certificate set types. In other words, the certificate provisioning system is configured to generate the certificate set. There are several certificate set types that are supported by the certificate provisioning system. The certificate set comprises at least one certificate. The certificate may comprise at least one of the public keys provided by the public key message and a digital signature. The digital signature is generated by the certification authority device by means of a private key of the certification authority device. The at least one certificate comprises the post-quantum public key and a post-quantum signature and/or the pre-quantum public key and a pre-quantum signature.

The certificate provisioning system is configured to receive a first certificate request message comprising a first certificate request to provide a first certificate set according to a first certificate set type. In other words, the certificate provisioning system is configured to provide the first certificate set. The certificate set type of the first certificate set depends on the first certificate set type requested in the first certificate request message. The first certificate request message may be provided by a provider of the public key message.

The certification authority device is configured to send a first certificate response message comprising the first certificate set according to the first certificate type. In other words, the certificate provisioning system generates the certificate set requested by the first certificate request according to the first certificate request message.

The certificate provisioning system is further configured to receive a second certificate request message comprising a second certificate request to provide a second certificate set according to a second certificate set type different from the first certificate set type. In other words, another certificate set is be requested from the certificate provisioning system. The second certificate set is configured according to the second certificate set type. The second certificate set type is different from the first certificate set type.

The certificate provisioning system is configured to send a second certificate response message comprising the second certificate according to the second certificate set type.

The invention has the advantage that the certificate provisioning system is configured to provide certificate sets according to different certificate set types. Therefore, the certificate provisioning system is configured to provide the certificate set according to the receiver's needs. This allows a provision of different certificate set types that are supported.

According to a further embodiment of the invention, the group of supported certificate types comprises a non-hybrid certificate set type wherein the non-hybrid certificate setup comprises at least one non-hybrid certificate comprising the post-quantum public key and the post-quantum signature or the pre-quantum public key and the pre-quantum signature. In other words, the certificate provisioning system is configured to provide the non-hybrid certificate set type. The non-hybrid certificate set type may comprise one or two non-hybrid certificates. The non-hybrid certificate may comprise the post-quantum public key and the respective post-quantum signature of the post-quantum public key. The non-hybrid certificate may comprise the pre-quantum public key and the respective pre-quantum signature. The embodiment has the advantage that the non-hybrid certificate comprising only one public key may be provided.

According to a further embodiment of the present invention, the group of supported certificate types comprises a hybrid non-composite certificate set type. In other words, the certificate provisioning system is configured to provide the hybrid non-composite certificate set type. The hybrid non-composite certificate set type comprises a hybrid non-composite certificate comprising the post-quantum public key and the post-quantum signature. The hybrid non-composite certificate further comprises the pre-quantum public key and the pre-quantum signature. In other words, the hybrid non-composite certificate set comprises the non-composite certificate. The non-hybrid certificate is a certificate comprising the post-quantum public key and the pre-quantum public key wherein the post-quantum public key is assigned the post-quantum signature and the pre-quantum public key is assigned the pre-quantum signature. In other words, the public keys signatures are provided in parallel.

According to a further embodiment of the invention, the group of supported certificate types comprises a hybrid composite certificate set type. The hybrid composite certificate set type comprises a hybrid composite certificate comprising a composite public key and a composite signature. The composite public key is a sequence of the post-quantum public key and the pre-quantum public key. In other words, the composite public key comprises the post-quantum public key and the pre-quantum public key. The composite signature of the composite public key is a sequence of the post-quantum signature and the pre-quantum signature.

According to a further embodiment of the present invention, the certification authority device is configured to generate a second certificate set upon reception of the first certificate request message comprising the first request and to store the second certificate set in a key repository of the certification authority device. In other words, the second certificate set is generated before the reception of the second certificate request message. The second certificate set is stored in the key repository. The second certificate set is provided upon reception of the second certificate request message from the key repository of the certification authority device.

According to a further embodiment the invention, the certification authority device is configured to generate a second certificate set upon reception of the second certificate request message comprising the second request and to provide the second certificate set upon reception of the second certificate request message. In other words, the certification authority device is configured to store the public keys. The certification authority device is configured to generate the second certificate set according to the second certificate request upon reception of the second certificate request message. The embodiment has the advantage that the requested certificate set is generated on purpose.

A second aspect of the present invention is related to a subject device. The subject device is configured to generate a post-quantum key pair related to a respective post-quantum cryptographic algorithm and a pre-quantum key pair related to a respective pre-quantum cryptographic algorithm. In other words, the subject device is configured to generate the post-quantum key pair comprising a private post-quantum key and a public post-quantum key. The private post-quantum key and the public post-quantum key are related to a respective post-quantum cryptographic algorithm. The pre-quantum key pair comprises a pre-quantum public key and a pre-quantum private key related to the respective pre-quantum cryptographic algorithms. Therefore, the rolling device is configured to generate a quantum secure post-quantum key pair and a non-quantum secure pre-quantum key pair.

The subject device is configured to send a public key message to a certification authority device. The public key message comprises the public key set comprising the post-quantum public key of the post-quantum key pair and the pre-quantum public key of the pre-quantum key pair. In other words, to allow a signing of the public keys by the certification authority device, the subject device configured to provide the public keys to the certification authority device in the public key message.

There may be several standards of certificates. Therefore, the subject device is configured to send a first certificate request message comprising a first request to provide the first certificate set according to a first certificate set type.

The subject device is configured to provide the first certificate set according to the first certificate type to a relying device to establish a secure communication channel between the subject device and the relying device.

According to a further embodiment of the present invention, the rolling device is configured to provide a link to the certificate provisioning system to the relying device for a second certificate request message comprising the second request to provide the second certificate according to the second certificate set type.

A third aspect of the present invention relates to a method to operate a certification authority device.

The certification authority device comprises a CA-Server device. The certification authority device is configured to generate a certificate set according to a selected certificate set type of a group of supported certificate set types. The certificate set comprises at least one certificate, wherein the at least one certificate comprises a post-quantum public key and a post-quantum signature and/or a pre-quantum public key and a pre-quantum signature.

A first step comprises receiving a public key message from an subject device by the certification authority device. The public key message comprises a public key set, comprising the post-quantum public key related to a respective post-quantum cryptographic algorithm and the pre-quantum public key related to a respective pre-quantum cryptographic algorithm.

A second step comprises receiving a first certificate request message by the certification authority device. The first certificate request message comprises a first request to provide a first certificate set according to a first certificate set type.

A third step comprises sending a first certificate response message by the certification authority device. The first certificate response message comprises the first certificate set according to the first certificate set type.

A fourth step comprises receiving a second certificate request message by the certification authority device. The second certificate request message comprises a second request to provide a second certificate set according to a second certificate set type different from the first certificate set type.

A fifth step comprises sending a second certificate response message by the certification authority device. The second certificate response message comprises the second certificate set according to the second certificate set type.

A fourth aspect of the invention is related to a computer program product comprising program code for performing a method according to the third aspect of the present invention. The computer program product may also be regarded as a computer program.

A fifth aspect of the invention is related to a computer-readable storage medium comprising at least the computer program product according to the fourth aspect.

The certification authority device, the subject device and the relying device may comprise a computing device.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawing. In the drawing, identical or functionally identical elements may be denoted by the same reference signs.

In the figures,
FIG 1 shows a schematic illustration of a network comprising a certification authority device;
FIG 2 shows another schematic illustration of a network comprising a certification authority device; and
FIG 3 shows another schematic illustration of a network comprising a certification authority device.

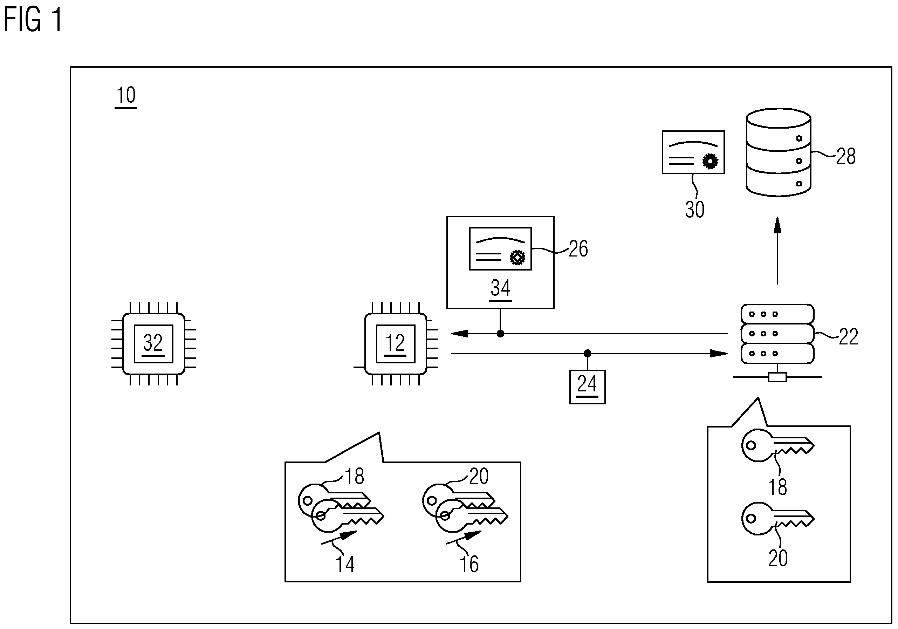

FIG 1 shows a schematic illustration of a network comprising a certification authority device.

FIG 1 shows a schematic illustration of a certification authority device 22. A subject device 12 may be a computer device of a network 10. Secure communication in the network 10 may be based on certificates. The respective certificate may comprise at least one public key and a respective signature of the public key. The signature may be generated by a certification authority device 22. The respective signature allows a check of the public key by a relying device 32 by means of a public key of the certification authority device 22. Cryptographic algorithms used in communication may involve pre-quantum and/or post-quantum algorithms.

The capabilities of the relying devices 32 in the network 10 may vary. Some of the relying devices 32 may be limited to operations involving only pre-quantum algorithms. Some of the relying devices 32 may be limited to operations involving only post-quantum algorithms. Some of the relying devices 32 may require operations that include both pre-quantum and post-quantum algorithms.

The relying devices 32 may also require specific types of certificates from a group of different certificates. Therefore, the certification authority device 22 may be configured to issue different types of certificate to the network 10. The certification authority device 22 may be configured to sign public keys using corresponding private keys of the certification authority device 22. The relying device 32 of the network 10 may use a public key of the certification authority device 22 to verify public keys. The subject device 12 may be configured to generate a post-quantum key pair 16 comprising a post-quantum public key 20 and a post-quantum private key. The post-quantum key pair 16 may be associated with a corresponding post-quantum cryptographic algorithm. In other words, the subject device 12 may be configured to perform cryptographic operations that may be quantum secure according to post-quantum cryptographic algorithms. It may be necessary to use pre-quantum cryptographic algorithms to enable communication with relying devices 32 that are not configured for post-quantum cryptographic algorithms. It may be necessary to use post-quantum cryptographic algorithms in combination with pre-quantum cryptographic algorithms.

Therefore, the subject device 12 is further configured to generate a pre-quantum key pair 14 comprising a pre-quantum public key 18 and a pre-quantum private key. To enable signing of the respective public key, the subject device 12 may be configured to send a public key message to the certification authority device 22, wherein the public key message may comprise a public key set comprising the post-quantum public key 20 and the pre-quantum public key 18. The public key message may further comprise identity data describing an identity of the subject device 12 which may be verified by the certification authority device 22 prior to signing the public keys.

The public key message may further comprise a request to provide a first certificate set 26 in accordance with a first certificate set 26 type. The certification authority device 22 is configured to receive the public key message and to store the public keys provided in the public key message. The certification authority device 22 may be configured to generate the first certificate set 26 according to the first certificate set 26 type. The certificate type may be a non-hybrid certificate set comprising two non-hybrid certificates, each of the non-hybrid certificates comprising a respective single public key and a respective signature of the public key. The certification authority device 22 may also be configured to provide a hybrid non-composite certificate set type comprising a single hybrid non-composite certificate comprising the post-quantum public key 20 signed with a post-quantum signature and the pre-quantum public key 18 signed with a pre-quantum signature. The certification authority device 22 may also be configured to provide a hybrid composite certificate set type comprising a single hybrid composite certificate. The hybrid composite certificate may comprise a composite public key signed with a composite signature. The composite public key may be a sequence of the pre-quantum public key 18 and the post-quantum public key 20. The composite signature may sign the composite public key and may be a sequence of a pre-quantum signature and a post-quantum signature.

After generating the respective certificate set according to the first certificate type, the certification authority device 22 may provide the first certificate set 26 to the subject device 12 by sending a first certificate response message 34 comprising the first certificate set 26 to the subject device 12. The subject device 12 may be configured to receive the first certificate response message 34 and to extract the public keys provided in the first certificate response message 34.

The subject device 12 may be configured to provide the public key to a relying device 32 to enable a cryptographic operation between the subject device 12 and the relying device 32. However, it is possible that the relying device 32 is not configured to perform cryptographic operations with the subject device 12 based on the first certificate set 26 type. To enable the cryptographic operations between the subject device 12 and the relying device 32, the certification authority device 22 is configured to provide a second certificate set 30 according to a second certificate set 30 type that is different from the first certificate set 26 type. The certification authority device 22 may comprise a certificate repository. The certification authority device 22 may be configured to generate the second certificate set 30 and to store the second certificate set 30 in the certificate repository.

The subject device 12 may be a computing device of a network 10. Communication in the network 10 may be carried out using certificates. The certificate may comprise at least a public key and a corresponding signature of the public key. The respective signature allows a verification of the public key by a relying device 32 by means of a public key of a certification authority. Cryptographic operations may be performed, which may comprise pre-quantum and/or post-quantum algorithms. relying devices 32 may be configured to use pre-quantum and/or post-quantum algorithms. The relying devices 32 may also require respective types of certificates. Therefore, a certification authority device 22 may be provided for the network 10. The certification authority device 22 may be configured to sign public keys using respective private keys of the certification authority device 22. The relying device 32 of the network 10 may use a public key of the certification authority device 22 to verify public keys. The relying device 32 may be configured to generate a post-quantum key pair 16 comprising a post-quantum public key 20 and a post-quantum private key. The post-quantum key pair 16 may be associated with a corresponding post-quantum cryptographic algorithm. In other words, the subject device 12 may be configured to perform cryptographic operations that may be quantum secure according to post-quantum cryptographic algorithms. It may be necessary to use pre-quantum cryptographic algorithms to enable communication with relying devices 32 that are not configured for post-quantum cryptographic algorithms. It may be necessary to use post-quantum cryptographic algorithms in combination with pre-quantum cryptographic algorithms.

Therefore, the subject device 12 is further configured to generate a pre-quantum key pair 14 comprising a pre-quantum public key 18 and a pre-quantum private key. To enable signing of the respective public key, the subject device 12 may be configured to send a public key message to the certification authority device 22, wherein the public key message may comprise a public key set comprising the post-quantum public key 20 and the pre-quantum public key 18. The public key message may further comprise identity data describing an identity of the subject device 12, which may be verified by the certification authority device 22 prior to signing the public keys.

The public key message may further comprise a request to provide a first certificate set 26 in accordance with a first certificate set 26 type. The certification authority device 22 is configured to receive the public key message and to store the public keys provided in the public key message. The certification authority device 22 may be configured to generate the first certificate set 26 according to the first certificate set 26 type. The certificate type may be a non-hybrid certificate set comprising two non-hybrid certificates, each of the non-hybrid certificates comprising a respective single public key and a respective signature of the public key. The certification authority device 22 may also be configured to provide a hybrid non-composite certificate set type comprising a single hybrid non-composite certificate comprising the post-quantum public key 20 signed with a post-quantum signature and the pre-quantum public key 18 signed with a pre-quantum signature. The certification authority device 22 may also be configured to provide a hybrid composite certificate set type comprising a single hybrid composite certificate. The hybrid composite certificate may comprise a composite public key signed with a composite signature. The composite public key may be a sequence of the pre-quantum public key 18 and the post-quantum public key 20. The composite signature may sign the composite public key and may be a sequence of a pre-quantum signature and a post-quantum signature.

After generating the respective certificate set according to the first certificate type, the certification authority device 22 may provide the first certificate set 26 to the subject device 12 by sending a first certificate response message 34 comprising the first certificate set 26 to the subject device 12. The subject device 12 may be configured to receive the first certificate response message 34 and extract the public keys provided in the first certificate response message 34.

The subject device 12 may be configured to provide the public key to a relying device 32 to enable a cryptographic operation between the subject device 12 and the relying device 32. However, it is possible that the relying device 32 is not configured to perform cryptographic operations with the subject device 12 based on the first certificate set 26 type. To enable the cryptographic operations between the subject device 12 and the relying device 32, the certification authority device 22 is configured to provide a second certificate set 30 according to a second certificate set 30 type that is different from the first certificate set 26 type. The certification authority device 22 may comprise a certificate repository. The certification authority device 22 may be configured to generate the second certificate set 30 and store the second certificate set 30 in the certificate repository.

In other words, FIG 1 depicts a subject device 12 that submits to the certification authority device 22, or a public key infrastructure entity delegated by the certification authority device 22 to validate the content of the certificate request, the set of Public Keys with identity information of the subject device 12 to certify. This set of information may be required to issue the certificate, maybe be submitted using a Certificate Signing Request (CSR) (see PKCS#10), or any other equivalent mechanism, like Certificate Request Message Format (CRMF). By the way of an example the subject device 12 may request to the certification authority device 22 a hybrid composite certificate. In this case the certification authority device 22 will issue a hybrid composite certificate to certificate the composite set of public keys comprising the pre-quantum Public Key 18 and the post-quantum Public Key 20, as specified in the above IETF documents. At the same time the certification authority device 22 may issue additional hybrid certificates using the same keys, like for example X.509 certificate type or additional types, not yet known as of today but that do not require an interaction of the subject device 12 with certification authority device 22 at issuance time.

Pre-quantum X.509 certificate types, e.g., a X.509 certificate for pre-quantum Public Key 18, and subject device 12 identity information to certify and another for post-quantum Public Key 20 and subject device 12 identity information to certify.

These additional X.509 certificates may be delivered to the certificate repository and make them available to the relying devices 32 that may retrieve them later for validation purposes.

After the certificate issuance phase is completed, the subject device 12 may use its onboard certificate, or point a certificate in the repository, to complete the authentication process. For example, if the subject device 12 assumes the role of a TLS enabled server and the relying device 32 assumes the role of a client, they may negotiate which type of certificate to use for the server authentication.

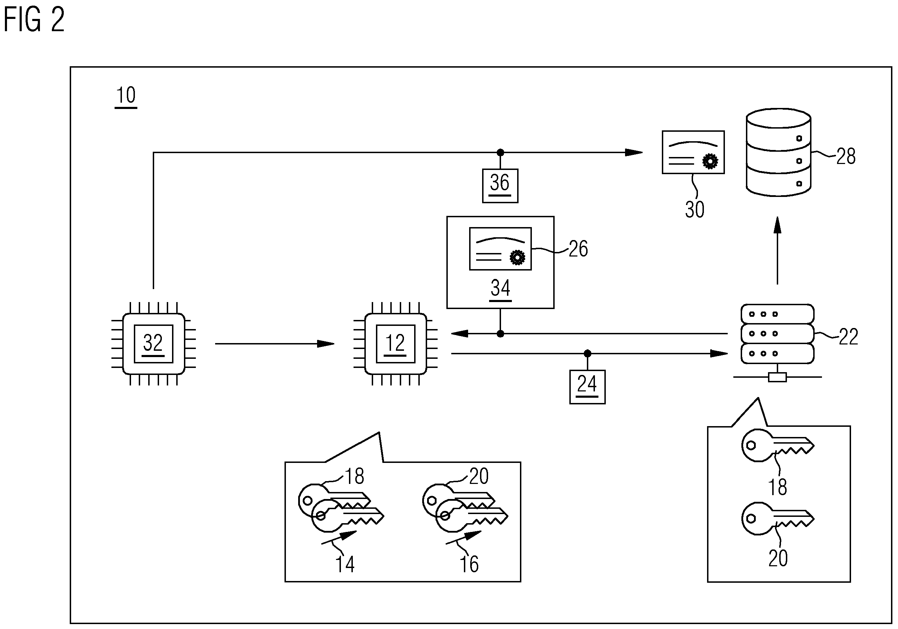

FIG 2 shows another schematic illustration of a network 10 comprising a certification authority device 22.

The relying device 32 and the subject device 12 may perform negotiation procedure to perform a cryptographic operation between both of the devices. During the negotiation procedure the devices may select a procedure based on the second certificate set 30 type. As the subject device 12 does not have the second certificate type, the subject device 12 may provide a link to the second certificate set 30 to the relying device 32. The relying device 32 may provide a second certificate request message 36 comprising a second request to provide the second certificate set 30 according to the second certificate to the certification authority device 22. The certification authority device 22 may provide the second certificate set 30 to the relying device 32 from the certificate repository by means of the second certificate response message.

If the certificate chosen by the client is not available on the server, it may forward the client to the certificate repository, as depicted in FIG 2. Current TLS specification does not allow the server to provide a certificate pointer instead of a certificate, therefore if such mechanism should be used an extension to the TLS protocol is required. The mechanism described in this invention may be also employed in other online protocols as well as offline certificate validation use cases, for example, offline validation of a signature on a document or any other digital artefact.

In a variant of the embodiment, the two peers have a negotiation phase to agree on the type of certificates that will be used, e.g., one party proposes the type of hybrid, while the second party either agree or proposes another one until the two parties agree on a certificate type. This variant has the advantage of ensuring maximum flexibility.

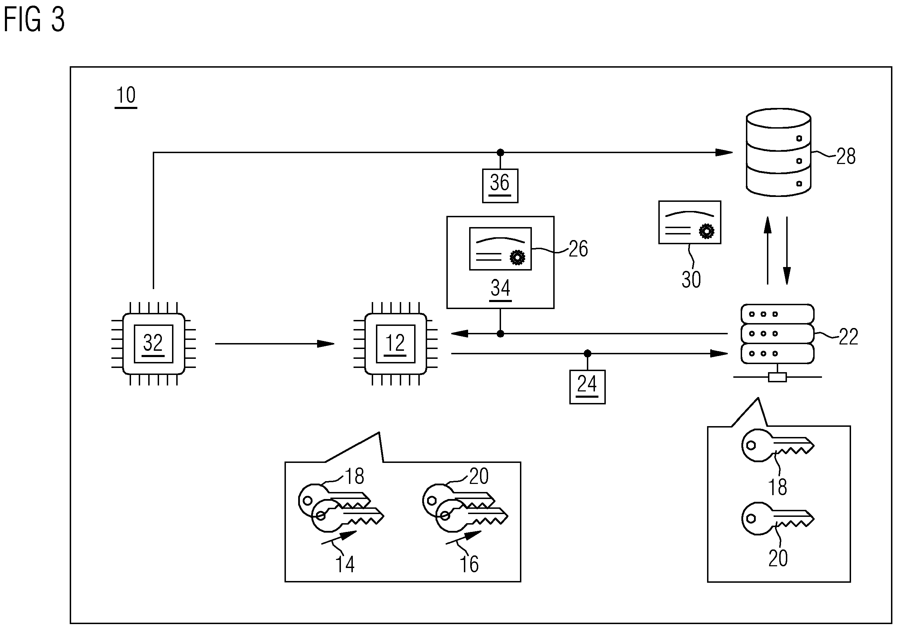

FIG 3 shows another schematic illustration of a network 10 comprising a certification authority device 22.

In the example the certification authority device 22 may receive the second certificate response message comprising the second certificate set 30 request. The second certificate set 30 may not be provided by the certificate repository therefore the certification authority device 22 may generate the second certificate set 30 according to the second certificate set 30 type provided in the second certificate request message 36. The certification authority device 22 may provide the second certificate set 30 to the relying device 32 in the second certificate response message.

In a variant of the embodiment the certification authority device 22 generates additional type of X.509 certificates on the fly upon request from the certificate repository entity which, in turn, was queried by a relying device 32 for a specific type of X.509 certificate.

It may be possible that the subject device 12 requests the provision of more than one certificate set according to respective certificate set types. It may be possible that the certification authority device 22 is configured to generate the certificate sets according to all certificate set types known by the certification authority device 22 and to provide all certificate set types to the subject device 12. The subject device 12 may be configured to extract the signed public keys of all certificate set types and the respective signatures. The subject device 12 may be configured to combine the public keys and the signature to the certificates upon request by the relying device 32.

In a variant of the embodiment the certification authority device 22 issues all X.509 certificate types know at the issuance time to the subject device 12. The subject device 12 parses all the certificates and stores the CA signatures and the certified information, also referred to as TBSCertificate in RFC5280. The subject device 12, additionally, stores the steps required to rebuild the different X.509 certificate types and discards the X.509 certificates obtained from the certification authority device 22. As soon as a relying device 32 will require a specific certificate the subject device 12 can re-build it on the fly. This variant has the advantage that less space will be required to store the different X.509 certificate types at the price of a small overhead required to re-build the certificates. The TBSCertificate information can be additionally compressed according to any well-known compression algorithm.

In a variant of the embodiment there is a third party trusted by all peers which acts a proxy converting different types of X.509 certificates on-the-fly to ensure interoperability. This variant has the advantage that the conversion happens on a trust third-party.

For all the reasons above, a certification authority device 22 should be able to issue the type of certificate requested by the subject device 12, plus a set of all the other types of hybrids, or pre-quantum (i.e., non-hybrid), certificates that might be required by the relying devices 32 that will validate the certificate.

This problem necessitates an innovative and scalable approach that addresses the following key concerns.

Development of mechanisms to issue additional type of certificates, using the same public key and proof of possession of the private key provided by the subject device 12, during a standard enrolment process, in a secure and scalable manner.

Publication, or on-the-fly generation, of additional types of certificates by the certification authority device 22, and make them available, in a timely manner, to the relying device 32 that initiates the X.509 certificate validation.

Integration of a signalling mechanism, within existing protocols, to make relying devices 32 aware of additional certificate types.

Optimization of certificate formats and storage techniques for resource-constrained devices to accommodate diverse hybrid cryptographic schemes while preserving limited memory and computational capabilities. This aspect is covered by a variant of the present invention report.

This invention proposes that a certification authority device 22 (CA) will issue multiple X.509 certificates, of different types, including different algorithms and parameters combinations, at issuance time of X.509 certificate required by the subject device 12, and make them available in a certificate repository operated by the certification authority device 22.

The present invention proposes to generate multiple types of hybrid and non-hybrid certificates during certificate issuing for the same entity to accommodate various migration scenarios. This includes additionally generating the same type of hybrid certificates but using different combinations of pre-quantum and post-quantum algorithms and parameters, hence allowing for two degrees of freedom. For example, given the following algorithms (note that in this example the parameters are neglected): RSA, ECC, Dilithium, Falcon and SPHINCS+ and the following options for certificate type (non-hybrid, hybrid,composite, hybrid-non-composite), one can choose ECC, Dilithium, SPHINCS+: in this case one could generate non-hybrid, hybrid-composite, hybrid-non-composite certificates for ECC, Dilithium, SPHINCS+ (non-composite), ECC+Dilithium, ECC+SPHINCS+, ECC+Dilithium+SPHINCS+, Dilithium+SPHINCS+ (composite) on a certificate signing request, where the keys are the same for all certificates, and delivers it the subject device 12.

Since there are several approaches to hybrid cryptography, and more will come in the future, this approach has the advantage that if an subject device 12 enrolls a certain type of X.509 certificate no re-issuances as long as the protocol used between the subject device 12 and the relying device 32 can be extended to point to a certificate repository to fetch an X.509 certificate and that the subject device 12 is able to support the correct signature mechanism that is required to authenticate the corresponding certificate type towards the relying device 32.

Advantages of the invention are interoperability by supporting multiple certificates, security by supporting multiple algorithm combinations. Additionally, if one of the algorithms is broken, or suspected of being broken, the mechanism described in this invention allows to revoke all hybrid, and non-hybrid, certificates that are signed with the broken algorithm, or a combination of such algorithm and another one, and still leaving the subject device 12 with at least one valid certificate.

## Claims

1. A certification authority device (22) comprising a CA-Server device, configured to:
- receive a public key message from an subject device, the public key message comprising a public key set, comprising a post-quantum public key related to a respective post-quantum cryptographic algorithm, a pre-quantum public key (18) related to a respective pre-quantum cryptographic algorithm,
- generate a certificate set according to a selected certificate set type of a group of supported certificate set types, the certificate set comprising at least one certificate, wherein the at least one certificate comprises the post-quantum public key and a post-quantum signature and/or the pre-quantum public key (18) and a pre-quantum signature;
- receive a first certificate request message (24) comprising a first request to provide a first certificate set (26) according to a first certificate set type;
- send a first certificate response message (34) comprising the first certificate set (26) according to the first certificate set type;
- receive a second certificate request message (36) comprising a second request to provide a second certificate set (30) according to a second certificate set type different from the first certificate set type; and
- send a second certificate response message comprising the second certificate set (30) according to the second certificate set type.

2. The certification authority device (22) according to claim 1, wherein the group of supported certificate set types comprises a non-hybrid certificate set type, wherein the non-hybrid certificate set type comprises at least one non-hybrid certificate comprising the post-quantum public key and the post-quantum signature or the pre-quantum public key (18) and the pre-quantum signature.

3. The certification authority device (22) according to claim 1 or 2, wherein the group of supported certificate set types comprises a hybrid non composite certificate set type, wherein the hybrid non composite certificate set type comprises a hybrid non composite certificate comprising the post-quantum public key and a post-quantum signature and the pre-quantum public key (18) and the pre-quantum signature.

4. The certification authority device (22) according to any one of the preceding claims, wherein the group of supported certificate set types comprises a hybrid composite certificate set type, wherein the hybrid composite certificate set type comprises a hybrid composite certificate comprising a composite public key and a composite signature, wherein the composite public key is a sequence of the post-quantum public key and the pre-quantum public key (18) and the composite signature is a sequence of the post-quantum signature and the pre-quantum signature.

5. The certification authority device (22) according to any one of the preceding claims, wherein the certification authority device (22) is configured to
- generate the second certificate set (30) upon reception of the first certificate request message (24) comprising the first request,
- store the second certificate set (30) in a key repository (28) of the certification authority device (22), and
- provide the second certificate set (30) upon reception of the second certificate request message (36) from the key repository (28) of the certification authority device (22).

6. The certification authority device (22) according to any one of the preceding claims, wherein the certification authority device (22) is configured to generate the second certificate set (30) upon reception of the second certificate request message (36) comprising the second request and to provide the second certificate set (30) upon reception of the second certificate request message (36).

7. The certification authority device (22) according to any one of the preceding claims, wherein the first certificate set (26) comprises a link to the second certificate set (30) in the certificate repository (28).

8. Subject device (12), configured to:
- generate a post-quantum key pair related to a respective post-quantum cryptographic algorithm and a pre-quantum key pair (14) related to a respective pre-quantum cryptographic algorithm;
- send a public key message to a certification authority device (22), the public key message comprising a public key set, comprising a post-quantum public key of the post-quantum key pair and a pre-quantum public key (18) of the pre-quantum key pair (14);
- send a first certificate request message (24) comprising a first request to provide a first certificate set (26) according to a first certificate set type;
- receive a first certificate response message (34) comprising the first certificate set (26) according to the first certificate set type; and
- provide the first certificate set (26) according to the first certificate set type to a relying device to establish a secure communication channel between the subject device (12) and the relying device.

9. Subject device (12) according to claim 8, configured to:
- provide a link to the certification authority device (22) to the relying device (32) for a second certificate request message (36) comprising a second request to provide a second certificate set (30) according to a second certificate set type;

10. A method for operating a certification authority device (22) comprising a CA-Server device, configured to generate a certificate set according to a selected certificate set type of a group of supported certificate set types, the certificate set comprising at least one certificate, wherein the at least one certificate comprises the post-quantum public key and a post-quantum signature and/or the pre-quantum public key (18) and a pre-quantum signature, the method comprising the following steps performed by the certification authority device (22):
- receiving a public key message from an subject device, the public key message comprising a public key set, comprising a post-quantum public key related to a respective post-quantum cryptographic algorithm, a pre-quantum public key (18) related to a respective pre-quantum cryptographic algorithm,
- receiving a first certificate request message (24) comprising a first request to provide a first certificate set (26) according to a first certificate set type;
- sending a first certificate response message (34) comprising the first certificate set (26) according to the first certificate set type;
- receiving a second certificate request message (36) comprising a second request to provide a second certificate set (30) according to a second certificate set type different from the first certificate set type; and
- sending a second certificate response message comprising the second certificate set (30) according to the second certificate set type.

11. A computer program product comprising program code for performing a method according to claim 10.

12. A computer-readable storage medium comprising at least the computer program product according to claim 11.
